# EUROPEAN PATENT SPECIFICATION

(11) **EP 4 408 910 B1**
(45) Date of publication and mention of the grant of the patent: **10.09.2025**
(21) Application number: 22797707.1
(22) Date of filing: 28.09.2022
(51) Int. Cl.: C08J 9/00, C08J 9/14

(54) **OPEN-CELLED MELAMINE RESIN FOAMS COMPRISING HALOGEN-FREE FLAME RETARDANTS**
HALOGENFREIE FLAMMSCHUTZMITTEL MIT MELAMINHARZSCHÄUMEN
MOUSSES DE RÉSINE DE MÉLAMINE COMPRENANT DES AGENTS IGNIFUGES SANS HALOGÈNE

(30) Priority: 01.10.2021 EP 21200402
(43) Date of publication of application: 07.08.2024
(73) Proprietor: BASF SE, 67056 Ludwigshafen (DE)
(72) Inventor: KOENIG, Alexander, 67056 Ludwigshafen am Rhein (DE); VATH, Bernhard, 67056 Ludwigshafen am Rhein (DE)
(74) Representative: BASF IP Association
(86) International application number: PCT/EP2022/076916
(87) International publication number: WO 2023/052389

(56) References cited:
- JP-A- 2021 036 038
- JP-A- H01 271 481
- US-A1- 2011 230 578
- US-A1- 2018 140 158

## Description

The present invention relates to melamine resin foams with an open-celled structure and a density in the range from 5 to 15 kg/m³ comprising 75 to 99 wt-% of a cured melamine resin and halogen-free flame retardants, selected from phoshine oxide, phosphinate or phosphonate, a process for producing such melamine resin foams and their use for acoustic and/or thermal insulation.

### Relevant Prior Art

EP 1 146 070 A2 relates to an open-cell melamine resin foam with improved fire properties, in which the surface of the cell skeleton is coated with an ammonium salt of the phosphoric acid, in particular ammonium orthophosphate and ammonium polyphosphate as flame retardants. The melamine resin foams with the flame-retardant coating often show a higher formaldehyde-emission.

CN 107987466 A discloses the preparation of a melamine formaldehyde foam by using a combination of petroleum ether and diphenylmethane diisocyanate as a foaming auxiliary agent, a vulcanized rubber, cell opener and a phosphate as flame retardant. Preferably, the flame retardant is tributyl phosphate, tris (2-ethylhexyl) phosphate, tris (2-chloroethyl) phosphate, tris (2, 3-dichloropropyl) phosphate, tris (2, 3-dibromopropyl) phosphate, cresyl-diphenyl phosphate, tricresyl phosphate, triphenyl phosphate, or (2-ethylhexyl) -diphenyl phosphate.

CN 107903579 A discloses a hot-compressed melamine resin foam good fireproof and flame-retardant properties, tensile strength and sound insulation properties. The preparation method comprises the steps of taking melamine formaldehyde resin, sequentially adding a foaming agent, a surfactant, a flame retardant, a cell opening agent and a curing agent, mixing, uniformly stirring, placing into a microwave foaming furnace for foaming, then cutting foam, carrying out hot pressing compression.

WO 2017/125414 discloses polyurethane aerogels having a high porosity, a low density and a sufficiently high mechanical stability combined with good flame resistance by adding a phosphorous compound with at least one functional group reactive toward isocyanate to the gel forming composition.

EP 1 142 939 A2 relates to a halogen-free, water-blown, flame-retardant rigid polyurethane foam and to a process for its production and the use of oxalkylated alkylphosphonic acids as flame retardants.

US 2011-023057 relates to a flame-retardant composite foam comprising foamed particles comprising 24 - 95% by weight of styrene polymer and from 1 to 65% by weight of a cured modified or foamed aminoplastic resin and from 0.1 to 20% by weight of an organic phosphorous compound as flame retardant. The density of the resultant composite foam is in the range from 35 to 50 g/l.

Flame retardants are generally added to the mixture of resin and blowing agent before foaming or applied as coating after foam preparation. The addition of solid flame retardants to melamine-formaldehyde prepolymer mixture often disturbs the cell formation and cell opening during foaming resulting in low mechanical performance or foam collapse. Impregnation of solid flame retardants to the foam by spraying or dipping makes a further impregnation step and preparation of a suspension necessary. Suspension stability, calandering and drying are often difficult with thick foam samples.

The object of the present invention is to provide a halogen-free, flame-retardant, open-celled melamine resin foam with sufficient mechanical stability, low density and low formaldehyde emission.

To solve the problem, the present invention provides melamine resin foams with an open-celled structure comprising a halogen-free flame retardant; selected from phoshine oxide, phosphinate or phosphonate and a process for producing the melamine resin foam with an open-celled structure comprising heating and foaming an aqueous mixture M using microwave radiation, said mixture M comprising melamine resin foam particles, at least one melamine-formaldehyde precondensate, at least one curative, at least one surfactant, at least one liquid halogen-free flame-retardant, selected from phoshine oxide, phosphinate or phosphonate and at least one blowing agent.

The melamine resin foam according to the invention comprises at least one halogen-free flame retardant, selected from phoshine oxide, phosphinate or phosphonate. At least one means one or mixtures of two or more halogen-free flame retardants. Preferably the melamine resin foam is halogen-free and does not contain any halogenated flame retardant or other halogenated additives.

Preferably the at least one halogen-free flame retardant is chemically bond to the melamine resin. The following properties of the halogen free flame retardants refer to the properties before chemically bonding to the melamine resin. Liquid means that the halogen-free flame retardant is liquid at ambient conditions (25°C, 101.325 kPa) before chemically bonding to the melamine resin. Preferably the viscosity is in the range from 100 to 700 mPa*s, determined with a Brookfield viscosimeter at 25°C. Preferably the hydroxyl number is in the range from 400 - 500 mg KOH/g determined by double Karl-Fischer titration. Preferably the phosphorus content of the halogen-free flame retardants is in the range from 10 - 13 % (w/w) as determined by photometry after oxidative dissolution.

Preferably the at least one halogen-free flame retardant is a liquid phoshine oxide, phosphinate or phosphonate compound. Liquid means the organophosphorus compound is liquid at ambient conditions (25°C, 101.325 kPa) before incorporation into the melamine resin foam. More preferably the at least one halogen-free flame retardant is a liquid phoshine oxide, phosphinate or phosphonate and phosphorus in oxidation states between +2 and +4. More preferably the at least one halogen-free flame retardant is selected from the following structures I - III

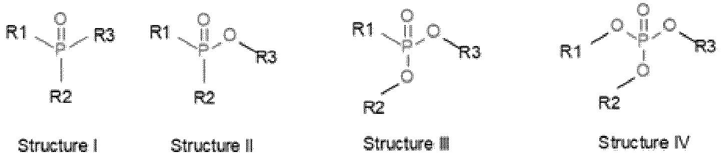

Wherein R1, R2 and R3 are same or different
- R1, R2:: linear or branched C1 - C6 alkyl, linear or branched C1 - C6 hydroxyalkyl;
- R3:: linear or branched C1 - C6 alkyl, linear or branched C1 - C6 hydroxyalkyl, bis (C1 - C6 hydroxyalkyl) amino C1-C6 alkyl.
R1, R2 and R3 might be bridged by ether groups

Preferably R1, R2 and R3 are
- R1, R2:: methyl, ethyl, propyl, isobutyl, hydroxymethyl, hydroxyethyl, hydroxypropyl, polyoxyethylene, bis (hydroxyethyl) aminomethy;
- R3:: methyl, ethyl, propyl, isopropyl, isobutyl, isobutyl.

Most preferably the at least one halogen-free flame retardant is selected from tris (hydroxy methyl) phosphine oxide, Bis(polyoxyethylene) methylphosphonate, Bis(3-hydroxypropyl) isobutylphosphine, Diethyl bis (hydroxyethyl) aminomethyl phosphonate.

The halogen-free flame retardants are preferably present in a total amount of 0.5 to 40 wt.-%, more preferably in a total amount of 2.5 to 25 wt.-%, most preferably in a total amount of 5 to 20 wt.-%, based on the melamine resin foam.

The open-celled melamine resin foam comprises 75 to 99 wt.-%, more preferably of 80 to 95 wt.-% of a cured melamine resin. Most preferably the open-celled melamine resin consists essentially of 80 to 95 wt.-% of cured melamine resin and 5 to 20 wt.-% of the halogen-free flame retardant.

The melamine resin foam has an open-celled structure and an open-cell content measured according to DIN ISO 4590 of more than 50 %, preferable of 95 % or higher, most preferably of 98 to 100%.

The density of the melamine resin foam is in the range from 5 to 15 kg/m³, more preferably 6 to 12 kg/m³.

Preferably the shore hardness 000 of the open-celled melamine resin foam is in the range from 35 to 75 N, measured according to ASTM D 2240.

Preferably the formaldehyde emission of the open-celled melamine resin is in the range from 5 to 15 mg FA / kg sample foam, measured according to EN 14184.

The melamine foam can be produced as described in WO 2009/021963. The melamine-resin foam according to the invention is preferably produced by a process comprising heating and foaming an aqueous mixture M using microwave radiation, said mixture M comprising at least one melamine-formaldehyde precondensate, at least one liquid halogen-free flame retardant, at least one curative, at least one surfactant and at least one blowing agent. The melamine resin foam can be tempered at a temperature between 120 - 300°C.

In order to achieve bonding to the melamine resin the at least one halogen-free flame retardant used in the process according to the invention is reactive towards the melamine resin or melamine resin precursor. Preferably the at least one halogen-free flame retardant has functional groups, which are capable to react with the melamine-formaldehyde precondensate. Preferably the at least one halogen-free flame retardant has hydroxyl groups as functional groups, most preferably 2 or 3 functional groups per molecule. The at least one halogen-free flame retardant used in the process has preferably the properties as described above and is used in a total amount of 0.5 to 40 wt.-%, more preferably in a total amount of 5 to 20 wt.-%, based on the melamine melamine-formaldehyde precondensate.

The melamine/formaldehyde precondensates may be prepared separately or commercially available precondensates of the two components, melamine and formaldehyde may be used. Preferably a melamine-formaldehyde precondensate having a molar ratio of melamine to formaldehyde ranging from 1 : 5 to 1 : 1.3, more preferably from 1 : 3,5 to: 1 : 1,5 is used. Preferably the number average molecular weight Mn ranges from 200 g/mol to 1000 g/mol. Preference is given to unmodified melamine/formaldehyde precondensates.

Anionic, cationic and nonionic surfactants and also mixtures thereof can be used as dispersant/emulsifier.

Useful anionic surfactants include for example diphenylene oxide sulfonates, alkane and alkylbenzenesulfonates, alkylnaphthalenesulfonates, olefinsulfonates, alkyl ether sulfonates, fatty alcohol sulfates, ether sulfates, α-sulfo fatty acid esters, acylaminoalkanesulfonates, acyl isethionates, alkyl ether carboxylates, N-acylsarcosinates, alkyl and alkylether phosphates. Useful nonionic surfactants include alkylphenol polyglycol ethers, fatty alcohol polyglycol ethers, fatty acid polyglycol ethers, fatty acid alkanolamides, ethylene oxide-propylene oxide block copolymers, amine oxides, glycerol fatty acid esters, sorbitan esters and alkylpolyglycosides. Useful cationic emulsifiers include for example alkyltriammonium salts, alkylbenzyldimethylammonium salts and alkylpyridinium salts.

The dispersants/emulsifiers can be added in amounts from 0.2% to 5% by weight, based on the melamine-formaldehyde precondensate.

Preferably the mixture M comprises a surfactant mixture comprising a mixture of 50 to 90 wt% of at least one anionic surfactant and 10 to 50 wt% of at least one nonionic surfactant, wherein the weight percentages are each based on the total weight of the surfactant mixture.

As curatives it is possible to use acidic compounds which catalyze the further condensation of the melamine resin. The amount of these curatives is generally in the range from 0.01% to 20% by weight and preferably in the range from 0.05% to 5% by weight, all based on the precondensate. Useful acidic compounds include organic and inorganic acids, for example selected from the group consisting of hydrochloric acid, sulfuric acid, phosphoric acid, nitric acid, formic acid, acetic acid, oxalic acid, toluene sulfonic acids, amido sulfonic acids, acid anhydrides and mixtures thereof. Preferably formic acid is used as curative.

The mixture further comprises at least one blowing agent. Useful physical blowing agents include for example hydrocarbons, such as pentane, hexane, halogenated, more particularly chlorinated and/or fluorinated, hydrocarbons, for example methylene chloride, chloroform, trichloroethane, chlorofluorocarbons, hydrochlorofluorocarbons (HCFCs), alcohols, for example methanol, ethanol, n propanol or isopropanol, ethers, ketones and esters, for example methyl formate, ethyl formate, methyl acetate or ethyl acetate, in liquid form or air, nitrogen or carbon dioxide as gases.

The amount of blowing agent in the mixture generally depends on the desired density for the foam. Preferably the amount in relation to the melamine-formaldehyde precondensate is chosen in an amount that the density of the foam is 5 to 15 kg/m³, more preferably 6 to 12 kg/m³. The blowing agent is preferably present in the mixture in an amount of 0.5% to 60% by weight, preferably 1% to 40% by weight and more preferably 1.5% to 30% by weight, based on the melamine-formaldehyde precondensate. It is preferable to add a physical blowing agent having a boiling point between 0 and 80°C. Most preferably pentane is used as blowing agent.

The precondensate being foamed up generally by heating the suspension of the melamine-formaldehyde precondensate to obtain a foamed material.

The introduction of energy may preferably be effectuated via electromagnetic radiation, for example via high-frequency radiation at 5 to 400 kW, preferably 5 to 200 kW and more preferably 9 to 120 kW per kilogram of the mixture used in a frequency range from 0.2 to 100 GHz, preferably 0.5 to 10 GHz. Magnetrons are a useful source of dielectric radiation, and one magnetron can be used or two or more magnetrons at the same time.

The foamed materials produced can be finally dried, removing residual water and blowing agent from the foam. Drying is carried out preferably in a drying oven at a temperature in the range of 40 to 200°C, particularly preferably 100 to 150°C until a constant weight. The process described provides blocks or slabs of foamed material, which can be cut to size in any desired shapes.

Preferably the process is used for recycling melamine resin foam scrap, preferably from melamine resin foam from the production plant, which was produced with properties outside the desired specification. A further subject to the present invention is a process for recycling melamine resin foam comprising the steps:
a) forming an aqueous mixture M from at least one melamine-formaldehyde precondensate, at least one curative, at least one surfactant, at least one liquid flame-retardant and at least one blowing agent,
b) heating and foaming the aqueous mixture M using microwave radiation to produce a melamine resin foam, and
c) optionally tempering the melamine resin foam obtained in step d) at a temperature between 120 - 300°C

The melamine resin foam prepared by the method according to the invention may be post-treated by the following methods:
1. Thermocompression to obtain foams with higher density, better durability and cleaning behavior.
2. Hydrophobation to obtain foams with lower water uptake and
3. Optionally impregnation with flame retardants to further improve the FST properties (Flame, Smoke, toxicity) in the case of fire.

A process for producing resilient compressed foamed materials having anisotropic mechanical properties on the basis of melamine-formaldehyde resins comprising a step of compressing the soft, uncured melamine-formaldehyde foamed material and curing and drying the foamed material obtained is described in WO 2011/134778.

Hydrophilization by impregnation with a fluorocarbon resin and/or silicon resin and additional impregnation with flame-retardant substances, such as silicates, borate, hydroxides or phosphates can be achieved as described in WO 2007/023118.

With the use of at least one liquid halogen-free flame retardant, which is reactive towards the melamine resin or melamine resin precursor a melamine resin foam with high char formation in case of a fire can be produced. The melamine resin foams according to the invention surprisingly have a low formaldehyde emission. They can be used for acoustic and/or thermal insulation.

### Examples

Hereinafter, the present invention is described in more detail and specifically with reference to the Examples, which however are not intended to limit the present invention.

Methods of measurement:
Ram pressure value [N]:
   Ram pressure measurements for evaluating the mechanical quality of the melamine resin foams were all carried out as follows. A cylindrical ram having a diameter of 8 mm and a height of 10 cm was pressed into a cylindrical sample having a diameter of 11 cm and a height of 5 cm in the direction of foaming at an angle of 90% until the sample tore. The tearing force [N], hereinafter also referred to as ram pressure value, provides information as to the quality of the foam.
Shore Hardness:
   The measurements were run according to ASTM D 2240. For the measurement of low density foams the scale of 000 was used (2.4 mm diameter of the sphere, spring force 1.111 N).
Formaldehyde measurement:
   The formaldehyde emission measurement was performed according to EN 14184. The result is given by mg FA / kg sample.

### Char Formation

Char formation was measured by cone calorimetry after flame retardancy testing according to ISO 5660-1. Char residue was calculated as difference of initial mass minus mass loss in weight percent. The higher the char residue the better is the flame retardancy effect. The following test assembly is used:

| | |
|---|---|
| Heat flux: | 50 kW/m² |
| Nominal duct flow rate: | 24 l/s |
| Sampling interval: | 2s |
| Separation: | 25 mm |
| Sample Thickness | 50 mm |
| Sample Geometry | 100 x 100 mm |

Materials used:
- MF: Melamine-formaldehyde precondensate having an average molecular weight (number average) M of 350 g/mol, with a molar ratio of melamine:formaldehyde of 1:3, which apart from melamine comprised no further thermoset-formers and apart from formaldehyde comprised no further aldehydes and which was sulfite group free.
- T1: C₁₂/C₁₄-alkyl sulfate, sodium salt.
- T2: alkyl polyethylene glycol ether made from a linear, saturated C₁₆/C₁₈ fatty alcohol.

Flame retardants:

| | class | description | Structure |
|---|---|---|---|
| FR1 | phosphine oxide derivative: | Amgard 1243, Solvay: Bis(3-hydroxypropyl)isobutylphosphine, CAS 147768-39-6 | 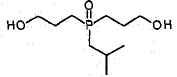 |
| FR2 | phosphonate derivative | Exolit OP 560, Clariant, CH5O3P·(C2H4O)n·(C2H4O)n, CAS 363626-50-0 | 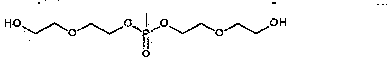 |
| FR3 | phosphine oxide derivative | Aflammit TL 1231, Thor, tris (hydroxy methyl) phosphine oxide, CAS 1067-12-5 | 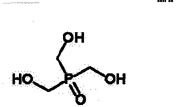 |
| FR4 | phosphonate derivative | Levagard 4090 N, Lanxess, Diethyl bis (hydroxyethyl) aminomethyl phosphonate, CAS 2781-11-5 | 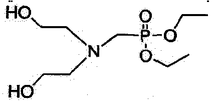 |

### Examples 1 - 4:

Production of the melamine resin foam in the lab: 100 g of a spray-dried melamine-formaldehyde precondensate (molar ratio 1 : 3) were dissolved in 40 g of water, then 1.5 g of a sodium C₁₂/C₁₄-alkyl sulfonate and 3 g of sodium formiate were added. Thereafter the flame retardants FR1 to FR4 were added in amounts listed in Table 3 to the mixture and the aqueous mixture was stirred for 60 s. Afterwards, 17.8 g of pentane as blowing agent and 3.1 g formic acid are added t0 the mixture. The mixture is stirred for 30 min and subsequently transferred to a propylene mold for foaming. The foaming is supported by microwave energy. After the foaming is accomplished, the foam is demolded and dried in the oven for 6 hours at 100°C.,

The melamine resin foams of Examples 1 to 4 show surprisingly low formaldehyde (FA) emissions and better mechanical properties compared to comparative example C1 and C2 with FR 5 and FR6. Char formation of 5% or more should be high in order to build as sufficient protective carbon layer.

Comparative Examples:
- FR5:: Ammonium polyphosphate (Exolit 422, Clariant)
- FR6:: Aluminiumhydroxid (Apyral, Nabaltec)

**Table 3: Properties of Flame retardant MF foams**

| Example | Flame retardant FR | FR loading [parts per 100 g dry MF resin] | FR content in dry MF-foam [wt.-%] | Foam density [kg/m³] | Ram Pressure [N] | Shore Hardness 000 [N] | Formaldehyde emission [mg FA/Kg] | Char formation [%] |
|---|---|---|---|---|---|---|---|---|
| 1-1 | FR1 | 2.5 | 1.5 | 8.4 | 25 | - | - | - |
| 1-2 | FR1 | 5 | 2.9 | 9.4 | 25 | 42 | 12 | - |
| 1-3 | FR1 | 7.5 | 4.4 | 10.3 | 15 | 45 | - | 10 |
| 1-4 | FR1 | 10 | 5.7 | 11.4 | 12 | 59 | 11 | 12 |
| 1-5 | FR1 | 15 | 8.6 | 10.9 | 11 | 65 | - | - |
| 1-6 | FR1 | 20 | 10.8 | 10.5 | <10 | 69 | 9 | 23 |
| 2-1 | FR2 | 2.5 | 1.5 | 8.3 | 32 | - | - | - |
| 2-2 | FR2 | 5 | 2.9 | 8.2 | 27 | 39 | 11 | 7 |
| 2-3 | FR2 | 7.5 | 4.4 | 8.7 | 15 | 43 | - | 9 |
| 2-4 | FR2 | 10 | 5.7 | 8.2 | 14 | 39 | 10 | 11 |
| 2-5 | FR2 | 15 | 8.6 | 8.7 | 10 | 61 | | - |
| 2-6 | FR2 | 20 | 10.8 | 8.6 | <10 | 67 | 8 | 24 |
| 3-1 | FR3 | 2.5 | 1.5 | 8.8 | 25 | - | - | - |
| 3-2 | FR3 | 5 | 2.9 | 8.9 | 20 | 38 | 12 | 9 |
| 3-3 | FR3 | 7.5 | 4.4 | 9.3 | 23 | 41 | - | 10 |
| 3-4 | FR3 | 10 | 5.7 | 8.5 | 15 | 44 | 10 | 12 |
| 3-5 | FR3 | 15 | 8.6 | 8.8 | 12 | 54 | - | |
| 3-6 | FR3 | 20 | 10.8 | 8.9 | <10 | 63 | 9 | 22 |
| 4-1 | FR4 | 2.5 | 1.5 | 8.5 | 28 | - | - | - |
| 4-2 | FR4 | 5 | 2.9 | 8.3 | 25 | 39 | 10 | 7 |
| 4-3 | FR4 | 7.5 | 4.4 | 9.3 | 21 | 40 | - | - |
| 4-4 | FR4 | 10 | 5.7 | 9.1 | 16 | 46 | 9 | 12 |
| 4-5 | FR4 | 15 | 8.6 | 9.2 | <10 | 50 | - | - |
| 4-6 | FR4 | 20 | 10.8 | 8.8 | <10 | 59 | 9 | 19 |
| C1-1 | FR5 | 1 | 0.6 | 9.2 | 21 | - | 27 | 5 |
| C1-2 | FR5 | 1 | 0.6 | 8.9 | 19 | - | 25 | - |
| C1-3 | FR5 | 5 | 2.9 | 8.7 | <19 | - | >100 | 9 |
| C2-1 | FR6 | 5 | 2.9 | 9.1 | 11 | - | 27 | 6 |
| C2-2 | FR6 | 5 | 2.9 | 9.3 | 12 | - | 25 | - |
| C3-1 | - | 0 | 0 | 9.5 | 30 | 51 | 10 | 5 |
| C3-2 | - | 0 | 0 | 10.1 | 34 | 46 | 11 | 6 |
| C3-3 | - | 0 | 0 | 9.8 | 29 | 47 | 13 | 5 |

## Claims

1. An open-celled melamine resin foam with an open-celled structure and a density in the range from 5 to 15 kg/m³, comprising 75 to 99 wt.-% of a cured melamine resin and at least one halogen-free flame retardant, selected from phoshine oxide, phosphinate or phosphonate.

2. The melamine resin foam according to claim 1, wherein the melamine resin foam has an open-cell content measured according to DIN ISO 4590 of more than 50 %.

3. The melamine resin foam according to claim 1 or 2, wherein the density of the melamine resin foam is in the range from 6 to 12 kg/m³.

4. The melamine resin foam according to any of claims 1 to 3, wherein the shore hardness 000 of the melamine resin foam is in the range from 35 to 75 N, measured according to ASTM D 2240.

5. The melamine resin foam according to any of claims 1 to 4, wherein the at least one halogen-free flame retardant is selected from tris (hydroxy methyl) phosphine oxide, Bis(polyoxyethylene) methylphosphonate, Bis(3-hydroxypropyl) isobutylphosphine, Diethyl bis (hydroxyethyl) aminomethyl phosphonate.

6. The melamine resin foam according to any of claims 1 to 5, wherein the halogen-free flame retardants are present in a total amount of 2.5 to 25 wt.-%, based on the melamine resin foam.

7. The melamine resin foam according to any of claims 1 to 6, wherein the melamine resin foam consists essentially of 80 to 95 wt.-% of cured melamine resin and 5 to 20 wt.-% of the halogen-free flame retardant.

8. A process for producing an open-celled melamine resin foam according to any of claims 1 to 7 comprising heating and foaming an aqueous mixture M using microwave radiation, said mixture M comprising at least one melamine-formaldehyde precondensate, at least one halogen-free flame retardant, selected from phoshine oxide, phosphinate or phosphonate, at least one curative, at least one surfactant and at least one blowing agent.

9. A process according to claim 8 wherein the at least one halogen-free flame retardant has functional groups, which are capable to react with the melamine-formaldehyde precondensate.

10. A process according to claim 9, wherein the at least one halogen-free flame retardant has 2 to 3 Hydroxyl groups as functional groups.

11. The process according to any of claims 8 to 10, wherein the at least one halogen-free flame retardant is selected from tris (hydroxy methyl) phosphine oxide, Bis(polyoxyethylene) methylphosphonate, Bis(3-hydroxypropyl) isobutylphosphine, Diethyl bis (hydroxyethyl) aminomethyl phosphonate.

12. The process according to any of claims 8 to 11, wherein said mixture M comprises a surfactant mixture comprising a mixture of 50 to 90 wt.-% of at least one anionic surfactant and 10 to 50 wt.-% of at least one nonionic surfactant, wherein the weight percentages are each based on the total weight of the surfactant mixture.

13. The process according to any of claims 8 to 12 wherein formic acid is used as curative.

14. The process according to any of claims 8 to 13 wherein pentane is used as blowing agent.

15. The process according to any of claims 8 to 14 comprising the steps:
a) forming an aqueous mixture M from at least one melamine-formaldehyde precondensate, at least one liquid halogen-free flame retardant, at least one curative, at least one surfactant and at least one blowing agent,
b) heating and foaming the aqueous mixture M using microwave radiation to produce a melamine resin foam, and
c) optionally tempering the melamine resin foam obtained in step d) at a temperature between 120 - 300°C

16. Use of the melamine resin foam according to any of claims 1 to 7 for acoustic and/or thermal insulation.

## Patentansprüche

1. Offenzelliger Melaminharzschaumstoff mit offenzelliger Struktur und einer Dichte im Bereich von 5 bis 15 kg/m³, umfassend 75 bis 99 Gew.-% eines gehärteten Melaminharzes und mindestens ein halogenfreies Flammschutzmittel, das aus Phoshinoxid, Phosphinat oder Phosphonat ausgewählt ist.

2. Melaminharzschaumstoff nach Anspruch 1, wobei der Melaminharzschaumstoff eine gemäß DIN ISO 4590 gemessene Offenzelligkeit von mehr als 50 % aufweist.

3. Melaminharzschaumstoff nach Anspruch 1 oder 2, wobei die Dichte des Melaminharzschaumstoffs im Bereich von 6 bis 12 kg/m³ liegt.

4. Melaminharzschaumstoff nach einem der Ansprüche 1 bis 3, wobei die gemäß ASTM D 2240 gemessene Shore-Härte 000 des Melaminharzschaumstoffs im Bereich von 35 bis 75 N liegt.

5. Melaminharzschaumstoff nach einem der Ansprüche 1 bis 4, wobei das mindestens eine halogenfreie Flammschutzmittel aus Tris(hydroxymethyl)phosphinoxid, Bis(polyoxyethylen)methylphosphonat, Bis(3-hydroxypropyl)isobutylphosphin, Diethylbis(hydroxyethyl)aminomethylphosphonat ausgewählt ist.

6. Melaminharzschaumstoff nach einem der Ansprüche 1 bis 5, wobei die halogenfreien Flammschutzmittel in einer Gesamtmenge von 2,5 bis 25 Gew.-%, bezogen auf den Melaminharzschaumstoff, vorliegen.

7. Melaminharzschaumstoff nach einem der Ansprüche 1 bis 6, wobei der Melaminharzschaumstoff im Wesentlichen aus 80 bis 95 Gew.-% gehärtetem Melaminharz und 5 bis 20 Gew.-% des halogenfreien Flammschutzmittels besteht.

8. Verfahren zur Herstellung eines offenzelligen Melaminharzschaumstoffs nach einem der Ansprüche 1 bis 7, umfassend das Erhitzen und Verschäumen einer wässrigen Mischung M unter Verwendung von Mikrowellenstrahlung, wobei die Mischung M mindestens ein Melamin-Formaldehyd-Vorkondensat, mindestens ein halogenfreies Flammschutzmittel, das aus Phoshinoxid, Phosphinat oder Phosphonat ausgewählt ist, mindestens ein Härtungsmittel, mindestens ein Tensid und mindestens ein Treibmittel umfasst.

9. Verfahren nach Anspruch 8, wobei das mindestens eine halogenfreie Flammschutzmittel funktionelle Gruppen aufweist, die mit dem Melamin-Formaldehyd-Vorkondensat reagieren können.

10. Verfahren nach Anspruch 9, wobei das mindestens eine halogenfreie Flammschutzmittel 2 bis 3 Hydroxylgruppen als funktionelle Gruppen aufweist.

11. Verfahren nach einem der Ansprüche 8 bis 10, wobei das mindestens eine halogenfreie Flammschutzmittel aus Tris(hydroxymethyl)phosphinoxid, Bis(polyoxyethylen)methylphosphonat, Bis(3-hydroxypropyl)isobutylphosphin, Diethylbis(hydroxyethyl)aminomethylphosphonat ausgewählt ist.

12. Verfahren nach einem der Ansprüche 8 bis 11, wobei die Mischung M eine Tensidmischung umfasst, die eine Mischung von 50 bis 90 Gew.-% mindestens eines anionischen Tensids und 10 bis 50 Gew.-% mindestens eines nichtionischen Tensids umfasst, wobei sich die Gewichtsprozentanteile jeweils auf das Gesamtgewicht der Tensidmischung beziehen.

13. Verfahren nach einem der Ansprüche 8 bis 12, wobei Ameisensäure als Härtungsmittel verwendet wird.

14. Verfahren nach einem der Ansprüche 8 bis 13, wobei Pentan als Treibmittel verwendet wird.

15. Verfahren nach einem der Ansprüche 8 bis 14, umfassend die Schritte:
a) Bilden einer wässrigen Mischung M von mindestens einem Melamin-Formaldehyd-Vorkondensat, mindestens einem flüssigen halogenfreien Flammschutzmittel, mindestens einem Härtungsmittel, mindestens einem Tensid und mindestens einem Treibmittel,
b) Erhitzen und Verschäumen der wässrigen Mischung M unter Verwendung von Mikrowellenstrahlung unter Bildung eines Melaminharzschaumstoffs und
c) gegebenenfalls Tempern des in Schritt d) erhaltenen Melaminharzschaumstoffs bei einer Temperatur zwischen 120 - 300 °C.

16. Verwendung des Melaminharzschaumstoffs nach einem der Ansprüche 1 bis 7 zur Schall- und/oder Wärmedämmung.

## Revendications

1. Mousse de résine de mélamine à alvéoles ouvertes ayant une structure à alvéoles ouvertes et une densité dans la plage de 5 à 15 kg/m³, comprenant 75 à 99 % en poids d'une résine de mélamine durcie et au moins un retardateur de flamme exempt d'halogène, choisi parmi un oxyde de phosphine, un phosphinate ou un phosphonate.

2. Mousse de résine de mélamine selon la revendication 1, dans laquelle la mousse de résine de mélamine a une teneur en alvéoles ouvertes mesurée selon la norme DIN ISO 4590 de plus de 50 %.

3. Mousse de résine de mélamine selon la revendication 1 ou 2, dans laquelle la densité de la mousse de résine de mélamine est dans la plage de 6 à 12 kg/m³.

4. Mousse de résine de mélamine selon l'une quelconque des revendications 1 à 3, dans laquelle la dureté Shore 000 de la mousse de résine de mélamine est dans la plage de 35 à 75 N, mesurée selon la norme ASTM D 2240.

5. Mousse de résine de mélamine selon l'une quelconque des revendications 1 à 4, dans laquelle l'au moins un retardateur de flamme exempt d'halogène est choisi parmi l'oxyde de tris(hydroxyméthyl)phosphine, le méthylphosphonate de bis(polyoxyéthylène), la bis(3-hydroxypropyl)isobutylphosphine, le bis(hydroxyéthyl)aminométhylphosphonate de diéthyle.

6. Mousse de résine de mélamine selon l'une quelconque des revendications 1 à 5, dans laquelle les retardateurs de flamme exempts d'halogène sont présents en une quantité totale de 2,5 à 25 % en poids, par rapport à la mousse de résine de mélamine.

7. Mousse de résine de mélamine selon l'une quelconque des revendications 1 à 6, dans laquelle la mousse de résine de mélamine est constituée essentiellement de 80 à 95 % en poids de résine de mélamine durcie et de 5 à 20 % en poids du retardateur de flamme exempt d'halogène.

8. Procédé de production d'une mousse de résine de mélamine à alvéoles ouvertes selon l'une quelconque des revendications 1 à 7, comprenant le chauffage et le moussage d'un mélange aqueux M en utilisant un rayonnement micro-ondes, ledit mélange M comprenant au moins un précondensat de mélamine-formaldéhyde, au moins un retardateur de flamme exempt d'halogène, choisi parmi un oxyde de phosphine, un phosphinate ou un phosphonate, au moins un agent de durcissement, au moins un tensioactif et au moins un agent gonflant.

9. Procédé selon la revendication 8, dans lequel l'au moins un retardateur de flamme exempt d'halogène a des groupes fonctionnels qui sont capables de réagir avec le précondensat de mélamine-formaldéhyde.

10. Procédé selon la revendication 9, dans lequel l'au moins un retardateur de flamme exempt d'halogène a 2 à 3 groupes hydroxyle comme groupes fonctionnels.

11. Procédé selon l'une quelconque des revendications 8 à 10, dans lequel l'au moins un retardateur de flamme exempt d'halogène est choisi parmi l'oxyde de tris(hydroxyméthyl)phosphine, le méthylphosphonate de bis(polyoxyéthylène), la bis(3-hydroxypropyl)isobutylphosphine, le bis(hydroxyéthyl)aminométhylphosphonate de diéthyle.

12. Procédé selon l'une quelconque des revendications 8 à 11, dans lequel ledit mélange M comprend un mélange de tensioactifs comprenant un mélange de 50 à 90 % en poids d'au moins un tensioactif anionique et 10 à 50 % en poids d'au moins un tensioactif non ionique, dans lequel les pourcentages en poids sont chacun basés sur le poids total du mélange de tensioactifs.

13. Procédé selon l'une quelconque des revendications 8 à 12, dans lequel de l'acide formique est utilisé comme agent de durcissement.

14. Procédé selon l'une quelconque des revendications 8 à 13, dans lequel du pentane est utilisé comme agent gonflant.

15. Procédé selon l'une quelconque des revendications 8 à 14 comprenant les étapes de :
a) formation d'un mélange aqueux M à partir d'au moins un précondensat de mélamine-formaldéhyde, au moins un retardateur de flamme liquide exempt d'halogène, au moins un agent de durcissement, au moins un tensioactif et au moins un agent gonflant,
b) chauffage et moussage du mélange aqueux M en utilisant un rayonnement micro-ondes pour produire une mousse de résine de mélamine, et
c) éventuellement trempage de la mousse de résine de mélamine obtenue à l'étape d) à une température comprise entre 120 et 300 °C.

16. Utilisation de la mousse de résine de mélamine selon l'une quelconque des revendications 1 à 7 pour l'isolation acoustique et/ou thermique.
